# EUROPEAN PATENT APPLICATION

(11) **EP 1 933 602 A1**
(43) Date of publication of application: **18.06.2008**
(21) Application number: 07122974.4
(22) Date of filing: 12.12.2007
(51) Int. Cl.: H05B 33/08, A01G 9/02

(54) **Illumination system for growing plants**

(30) Priority: 13.12.2006 NL 1033044; 05.01.2007 NL 1033179; 12.04.2007 NL 2000588
(71) Applicant: Kooymans Beheer B.V., 5611 JC Eindhoven (NL)
(72) Inventor: Kooijmans, Antonius Gerardus Petrus Johannes, 5616 JC, Eindhoven (NL)
(74) Representative: Verhees, Godefridus Josephus Maria

(57) **Abstract**

A lighting system 1 for cultivating plants has a hollow carrier 3 in the form of a tube, with several LEDs 5 inside it. The backs of the LEDs 5 are in the wall 9 of the carrier 3 and are cooled by water 11 flowing through the carrier. The heated water can then be used for the plants or for heating or energy reclamation.

The light spectrum can be adjusted. Making the spectrum narrower gives less light pollution and less energy is needed for the plant growth. Varying the colour of the light enables the plant growth to be controlled.

The height of the carrier 3 can be adjusted so that the lighting system 1 can be adjusted at an optimum height for the plants.

## Description

### BACKGROUND OF THE INVENTION:

### Field of the invention

The invention relates to a lighting system for cultivating plants. More in particular the invention relates to a lighting system for use in greenhouses.

### Prior art

Such a lighting system is generally known. The known lighting system comprises strip lights, corona discharge lamps or high-pressure sodium lamps, which are present in fittings. The heat produced in the greenhouses by the known lighting system has to be dissipated in order to create the correct environmental heat for the plants. Heat is now dissipated by opening windows in the greenhouse. This energy loss is also accompanied by the release of carbon dioxide to the atmosphere, which has been deliberately artificially introduced into the greenhouse for the benefit of the plants.

### Summary of the invention

An objective of the invention is to improve the known lighting system. For this purpose the lighting system according to the invention is characterised in that it comprises a hollow carrier through which a coolant can flow, and LEDs that are connected to the carrier so that this heat can be transferred to the coolant flowing through the carrier. By removing heat that is developed by the LEDs from the room, the temperature in this room can be controlled better and the heat can be used effectively for other purposes, such as for example for the plants, for heating or to reclaim energy. Less carbon dioxide also needs to be lost. Moreover, the lifetime of the LEDs will be increased by the cooling action. A liquid, for example water, or a gas can be used as the coolant. The lighting system according to the invention also has the advantage that no shadow is formed, as is the case with the known strip lights. The carrier can for example be made as a hollow extrusion shape or a hose.

An embodiment of the lighting system according to the invention is characterised in that the backs of the LEDs are attached to the carrier.

Another embodiment of the lighting system according to the invention is characterised in that there are pegs on the backs of the LEDs that protrude through the carrier wall.

A still further embodiment of the lighting system according to the invention is characterised in that the LEDs are attached to a holder, which is present in the carrier, whereby a waterproof encasement is present around the holder with the LEDs.

In this latter embodiment the inside of carrier is preferably provided with lips that clamp the holder between them.

A further embodiment of the lighting system according to the invention is characterised in that the LEDs are bundled in groups, which groups are spaced at a distance from each other.

A still further embodiment of the lighting system according to the invention is characterised in that the light spectrum can be adjusted. Plants only use part of the spectrum in order to grow (red light) and another part (blue light) to straighten. The spectrum between red and blue (= green) light needed for the photosynthesis of plants is used to a much less extent. Varying the colour of the light enables the growth of plants to be controlled. Narrowing the spectrum leads to less light pollution and less energy is needed for the plant growth.

Again a further embodiment of the lighting system according to the invention is characterised in that the height of the carrier can be adjusted. This means that the height of the lights can be set optimally for the plants and the lights can be raised as the plants grow. Particularly the new leaves at the top of the plant ensure the photosynthesis.

The carrier is preferably made of an insulating material. This limits the loss of heat from the flowing medium to the surroundings as much as possible.

A still further embodiment of the lighting system according to the invention is characterised in that it also comprises a cupboard provided with several shelves stacked above each other, in which the carrier and the LEDs are found in the shelves. The plants are here for example placed in crates, which are placed on the shelves. The LEDs are preferably present at the bottom of the shelves and the cooling is preferably at the top of the shelves.

### Brief description of the drawings

The invention will be elucidated more fully below on the basis of drawings in which embodiments of the lighting system according to the invention are shown. In these drawings:
Figure 1 shows a first embodiment of the lighting system according to the invention in perspective;
Figure 2 shows the lighting system shown in figure 1 in transverse cross-section;
Figure 3 shows a second embodiment of the lighting system according to the invention;
Figure 4 shows a third embodiment of the lighting system according to the invention;
Figure 5 shows a fourth embodiment of the lighting system according to the invention in transverse cross-section;
Figure 6 shows the lighting system shown in figure 5 in lengthwise cross-section, and
Figure 7 shows a fifth embodiment of the lighting system according to the invention in transverse cross-section.

### Detailed description of the drawings

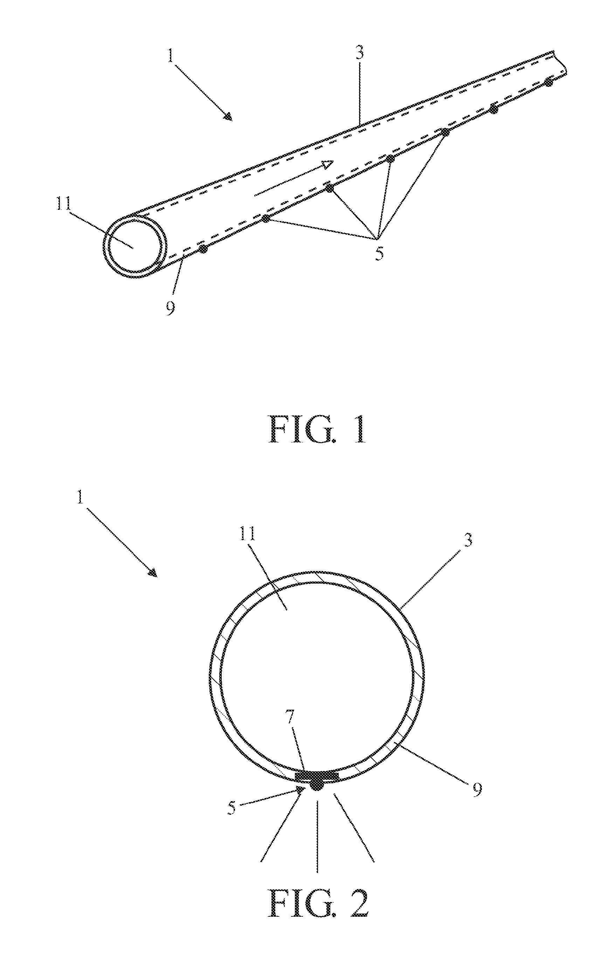

Figures 1 and 2 show a first embodiment of the lighting system according to the invention in perspective and transverse cross-section respectively. The lighting system 1 has a hollow carrier 3, in the form of a tube, and several LEDs 5 inside it. The backs 7 of the LEDs 5 are attached to the wall 9 of the carrier 3 and are cooled by water 11 flowing through the carrier. The heated water can then be used for the plants or for heating or for energy reclamation.

The light spectrum can be adjusted. Making the spectrum narrower produces less light pollution and less energy is needed for the growth of plants. Varying the colour of the light enables the growth of plants to be controlled.

The height of the carrier 3 can be adjusted so that the height of the lights is optimum for the plants. The idea here is that particularly the new leaves at the top of the plant take care of the photosynthesis.

The carrier is made of an insulating material so that heat loss from the flowing medium to the surroundings is limited as much as possible. The heat around the LEDs will have to be transferred as much as possible via a contact surface to the flowing medium in the carrier. The carrier at the place of the LEDs can be interrupted or thinned to achieve good heat transfer. The LEDs on the contact surfaces can also be provided with pegs which protrude through the carrier into the flow path of the medium.

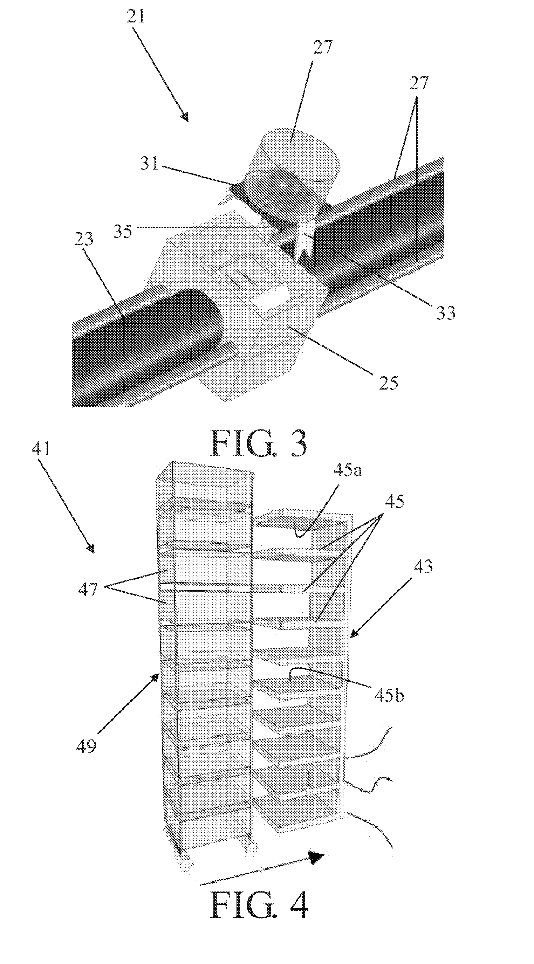

Figure 3 shows a second embodiment of the lighting system according to the invention. This lighting system 21 has a hollow carrier 23 in the form of a tube with assembly blocks 25 on it for LEDs 27. There are two electrical wires 29 (low voltage) next to the carrier 23 to supply the LEDs. The backs 31 of the LEDs are provided with pegs 35, which after attachment of the LEDs on the assembly blocks 25 protrude through the wall of the carrier 23 into the flow path of the coolant through the carrier. Moreover there are further pegs 33 on the backs 31 of the LEDs, which after attachment of the LEDs on the assembly blocks 25 are in contact with the electrical wires 29.

Figure 4 is a third embodiment of the lighting system according to the invention. In this the lighting system 41 has a cupboard 43 provided with several shelves 45 stacked above each other. The carriers and the LEDs are in the shelves and the plants are in crates 47, which are in a rack 49. Wheeling the rack 49 into the cupboard 43 puts the crates 47 between the shelves 45. The LEDs are preferably at the bottom 45a of the shelves and the cooling is preferably at the top 45b of the shelves. The cupboard 43 is connected to an ingoing and outgoing water supply for the cooling and to an electrical supply for the LEDs.

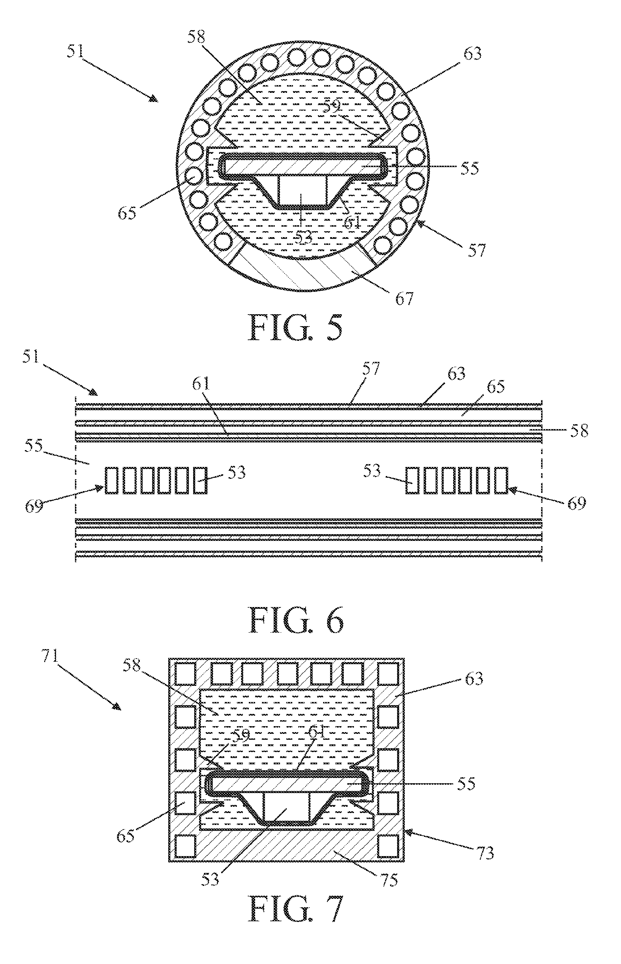

Figure 5 shows a fourth embodiment of the lighting system according to the invention in transverse cross-section. In this embodiment of the lighting system 51 the LEDs 53 are on a holder 55, which is made as an elongated pcb-strip. The holder 55 with the LEDs 53 on it is completely inside a hollow carrier 57, which is again made as a hose or tube through which coolant 58 (for example water) flows. There are lips 59 on the inside of the carrier 57 that clamp the holder 55 between them.

To prevent a short circuit the holder 55 with the LEDs 53 on it are in a waterproof encasement 61, which is fitted tightly around the holder with the LEDs. The encasement 61 is formed by a foil, vacuum packed around the holder with the LEDs.

There are insulating cavities 65 in the wall 63 of the carrier 57, which extend in the lengthwise direction of the carrier and are spaced at a distance from each other over part of the circumference of the carrier. The part 67 of the carrier 57 in which there are no cavities 65 forms a translucent part of the carrier.

The LEDs 53 are bundled in groups 69, see figure 6, where the lighting system 51 is shown in lengthwise cross-section. The groups 69 are spaced at a distance from each other on the holder.

Figure 7 shows a fifth embodiment of the lighting system according to the invention in transverse cross-section. The lighting system 71 shown is a variant of the previous lighting system 51 and all parts that are equal or have the same function have the same reference numbers. In this lighting system 71 the carrier 73 is made as a hose or tube with a rectangular cross-section. The LEDs 53 are here at a shorter distance from the translucent part 75 of the carrier. This gives a thinner water film between the LEDs and this part 75 so that there is less chance of decreasing the translucency by pollution of the water.

Although in the above the invention is explained on the basis of the drawings, it should be noted that the invention is in no way limited to the embodiments shown in the drawings. The invention also extends to all embodiments deviating from the embodiments shown in the drawings within the context defined by the claims. The encasement 61 can thus also be applied by dipping the holder with the LEDs in silicones.

## Claims

1. Lighting system for cultivating plants, **characterised in that** the lighting system comprises a hollow carrier through which a coolant can flow, and LEDs that are connected to the carrier so that this heat can be transferred to a medium flowing through the carrier.

2. Lighting system according to claim 1, **characterised in that** the backs of the LEDs are attached to the carrier.

3. Lighting system according to claim 1, **characterised in that** there are pegs on the back of the LEDs which protrude through the carrier wall.

4. Lighting system according to claim 1, **characterised in that** the LEDs are attached to a holder, which is inside the carrier, in which a waterproof encasement is present around the holder with the LEDs.

5. Lighting system according to claim 4, **characterised in that** the inside of the carrier is provided with lips that clamp the holder between them.

6. Lighting system according to one of the preceding claims, **characterised in that** the LEDs are bundled in groups, which groups are spaced at a distance from each other.

7. Lighting system according to one of the preceding claims, **characterised in that** the light spectrum can be adjusted.

8. Lighting system according to one of the preceding claims, **characterised in that** the height of the carrier can be adjusted.

9. Lighting system according to one of the preceding claims, **characterised in that** the carrier is made of an insulating material.

10. Lighting system according to one of the preceding claims, **characterised in that** the lighting system also comprises a cupboard provided with several shelves above each other, in which the carrier and the LEDs are in the shelves.
